(19) Europäisches Patentamt
European Patent Office
Office européen des brevets

(11) Numéro de publication: **0 465 750 A1**

(12) **DEMANDE DE BREVET EUROPEEN**

(21) Numéro de dépôt: **90440089.2**

(51) Int. Cl.$^5$: **B65G 47/244**

(22) Date de dépôt: **12.10.90**

(30) Priorité: **11.07.90 FR 9009186**

(43) Date de publication de la demande:
**15.01.92 Bulletin 92/03**

(84) Etats contractants désignés:
**AT BE CH DE DK ES GB GR IT LI LU NL SE**

(71) Demandeur: **CARTONNERIES DE LA LYS-ONDULYS, Société Anonyme**
**1 rue Charles Saint Venant**
**F-59160 Lomme (Nord)(FR)**

(72) Inventeur: **Ringot, Jean-Marc**
**47 rue du Lieutenant Baillet**
**F-59112 Carnin (Nord)(FR)**
Inventeur: **Sauvaige, Henri**
**1 rue Charles Saint-Venant**
**F-59160 Lomme (Nord)(FR)**

(74) Mandataire: **Lepage, Jean-Pierre**
**Cabinet Lepage & Aubertin Innovations et Prestations S.A. 23/25, rue Nicolas Leblanc**
**B.P. 1069**
**F-59011 Lille Cédex 1 (Nord)(FR)**

(54) **Dispositif à orienter des charges sur convoyeur linéaire et palettiseur présentant un tel convoyeur.**

(57) L'invention est relative à un dispositif à orienter les charges sur convoyeur linéaire. Elle permet notamment de faire pivoter les colis sur chemin à rouleaux moteurs de palettiseurs pour faciliter leur rangement sur palettes.

Selon l'invention, le dispositif se présente sous la forme d'une butée (3) commandée mobile transversalement. Le mouvement de la butée (3) correspond soit sensiblement, soit exactement, à la crête d'une sinusoïde. Ceci permet de créer un point de contact sensiblement fixe avec la charge (2).

L'invention concerne notamment les constructeurs de matériel de manutention.

EP 0 465 750 A1

L'invention est relative à un dispositif à orienter des charges sur convoyeur linéaire ainsi qu'à une application du dit dispositif à un palettiseur. Elle trouvera notamment son application chez les constructeurs de matériel de manutention automatique.

Les convoyeurs linéaires sont très largement utilisés dans l'industrie pour assurer le transport de marchandises entre différents postes de fabrication. Avec les développements technologiques, de plus en plus fréquemment, on rencontre en bout de chaîne de convoyage, un engin de préhension des charges automatisé. C'est par exemple le cas dans les postes d'encaissage avec les palettisseurs qui sont des installations destinées à ranger des charges, telles que notemment des colis ou cartons, sur des palettes.

Pour que ces installations automatiques fonctionnent correctement, certains critères impératifs doivent être respectés. En particulier, les charges sur le convoyeur linéaire doivent être correctement espacées et orientées. Ces deux critères sont imposés par le poste de travail situé en amont du convoyeur linéaire où sont précisément déposées les charges. A ce niveau, très souvent, on rencontre également des installations automatiques susceptibles de travailler à une certaine cadence imposant l'écart entre les colis et également en fonction de critères géométriques de sortie imposant une certaine position des colis sur le convoyeur linéaire.

Généralement, la charge est centrée sur le convoyeur linéaire et lorsqu'il s'agit d'une pièce parallélépipédique, elle est rangée soit transversalement, soit longitudinalement sur le convoyeur.

Dans certaines applications, cette orientation fixe de la charge sur le convoyeur peut constituer une gêne. Par exemple, avec les palettiseurs automatiques, il est nécessaire de ranger la charge tantôt longitudinalement, tantôt transversalement sur la palette et par conséquent, il faut que le colis sur le convoyeur linéaire se présente dans la position voulue.

Cette alternative peut difficilement être imposée au poste de travail précédent et par conséquent, il est nécessaire de mettre en oeuvre un dispositif à orienter les charges sur convoyeur linéaire pour placer le colis dans la position souhaitée.

Actuellement, on connaît des dispositifs à même à orienter dans une position fixe une charge. Cela se présente par exemple sous la forme d'une bande latérale motorisée contre laquelle on plaque le colis de façon à ce qu'il s'aplique contre la bande et soit correctement orienté.

Toutefois, lorsqu'il s'agit de faire pivoter la charge avec un angle de rotation allant jusqu'au quart de tour, les solutions proposées par les constructeurs sont rares.

Une solution connue consiste à utiliser un croisillon noyé dans le convoyeur linéaire. La charge est immobilisée au-dessus du croisillon qui alors s'élève supportant la charge pour la dégager des rouleaux du convoyeur. Le croisillon peut alors pivoter pour orienter la charge et une fois cette opération effectuée, il s'abaisse à nouveau pour s'escamoter dans les rouleaux et laisser la charge être entraînée à nouveau avec une orientation correcte.

Ce dispositif souffre de trois défauts majeurs. Tout d'abord, il y a rupture du mouvement continu de translation puisque la charge est immobilisée durant son mouvement de rotation. Ceci réduit considérablement la cadence de travail du convoyeur linéaire.

Ensuite, cette technique est applicable pour des charges de dimensions relativement modestes, de faible inertie, et d'un poids raisonnable. De plus, la rotation est généralement de 90° minimum.

Il faut par ailleurs souligner l'aspect coûteux de ce mécanisme qui combine l'emploi de différents vérins.

Le but principal de la présente invention est de présenter un dispositif à orienter les charges sur convoyeur linéaire qui permette de pallier les inconvénients des systèmes connus et dont un avantage est de ne pas rompre le mouvement d'avancement continu des marchandises. Cela permet de soutenir des cadences de travail très élevées sans risque d'embouteillage ni d'accumulation de colis.

Par ailleurs, le dispositif à orienter les charges de la présente invention peut s'appliquer à des colis de dimensions et poids très importants.

Un autre avantage de la présente invention est de présenter un dispositif à orienter les charges qui soit très économique grâce notamment à la simplicité du matériel mis en oeuvre.

Dans son travail, le pivotement des charges se fait progressivement et sans à-coups, ce qui permet par exemple de travailler sur des objets disposés en piles non liées sans risquer de voir la pile s'effronder ou tout au moins se déranger.

En outre, la présente invention autorise avantageusement des mouvements de rotation non limités tels que :

- rotation précise de 0 à 90 ° pour un dispositif à une butée, de 0 à 180 ° avec deux butées,
- rotation dans un sens ou un autre,
- rotation autour du centre de surface, la charge restant centrée sur le convoyeur,
- rotation à partir d'un point précis de la charge par le positionnement initial de la butée,

- rotation sans arrêter ni le convoyeur ni la charge.

Un autre but de la présente invention est de proposer une application du dispositif de l'invention à un palettiseur pour faciliter le rangement des charges ou colis sur la palette.

D'autres buts et avantages de la présente invention apparaîtront au cours de la description qui va suivre qui n'est cependant donnée qu'à titre indicatif.

Selon l'invention, le dispositif à orienter des charges sur convoyeur linéaire, telles que notamment des colis sur un chemin à rouleaux moteurs, est caractérisé par le fait qu'il se présente sous la forme d'au moins une butée commandée mobile transversalement par rapport au sens de déplacement de la dite charge sur le convoyeur.

L'invention sera mieux comprise à la lecture de la description suivante accompagnée de dessins en annexe parmi lesquels :

- les figures 1a, b, c, schématisent les différentes phases de travail du dispositif à orienter les charges selon la présente invention,
- la figure 2 représente le diagramme de déplacement latéral de la butée en fonction du temps.

La présente invention vise un dispositif à orienter des charges sur convoyeur linéaire, telles que notamment des colis sur chemin à rouleaux moteurs ainsi qu'une application du dit dispositif à un palettiseur. Elle concerne principalement les constructeurs de matériel de manutention automatique.

Les convoyeurs linéaires sont largement utilisés dans l'industrie pour assurer le transport de marchandises entre les différentes stations de travail. Dans le cas d'installations entièrement automatisées, la pose et la reprise des objets sur convoyeur linéaire sont assurées à l'aide de machines robots.

Il s'avère qu'il soit parfois nécessaire de modifier l'orientation des charges sur le convoyeur linéaire afin que celles-ci soient reprises en position correcte pour son rangement ultérieur. Cela se rencontre par exemple lors de l'encaissage en particulier avec des palettiseurs automatiques. La machine en elle-même est incapable d'orienter le colis, il faut qu'il soit présenté à la machine en position correcte pour être prélevé sur le convoyeur linéaire et déposé sur une palette de conditionnement.

En prenant l'exemple de colis parallélépipédiques, le rangement optimum sur une palette demande parfois à ce que certains colis soient disposés longitudinalement et d'autres colis transversalement pour occuper toute la surface du plateau. Dans ce cas, le palettiseur doit recevoir les colis tantôt orientés longitudinalement, tantôt orientés transversalement. La machine transfert située en amont de l'encaissage est bien souvent incapable d'orienter elle-même les charges en position correcte et il est nécessaire de faire appel à une station de préparation spécialement adaptée à cet usage.

C'est dans ce cadre que s'inscrit le dispositif à orienter les charges sur convoyeur linéaire de la présente invention qui en outre offre l'avantage de ne pas rompre l'avance continue des colis. La cadence de travail est donc élevée et la capacité à travailler sur des charges de grande dimension ou de poids important est considérable.

Le principe de fonctionnement du dispositif à orienter les charges sur convoyeur linéaire est schématisé aux figures 1a, b, et c.

Tout d'abord, on prévoit un convoyeur linéaire 1 de type traditionnel.

Les charges 2 sont entraînées dans un mouvement de déplacement linéaire par le convoyeur 1. Dans l'exemple choisi, il s'agit de colis de forme parallélépipédique, ce qui correspond à la majorité des situations rencontrées. Ces charges 2 peuvent en outre être constituées d'une pile d'objets superposés. En effet, la progressivité de l'action du dispositif à orienter de la présente invention permet de traiter des piles d'objets non liés sans risquer d'effondrement de la pile.

Dans l'exemple de la figure 1, les charges ou colis 2 sont disposés transversalement sur le convoyeur linéaire 1 et le rôle du dispositif à orienter les charges de la présente invention est de modifier le positionnement préalable des charges 2 pour les disposer longitudinalement sur le convoyeur linéaire 1 en les faisant pivoter.

Selon la caractéristique principale de la présente invention le dispositif à orienter les charges se présente sous la forme d'au moins une butée 3 commandée mobile transversalement par rapport au sens de déplacement de la charge sur le convoyeur.

L'emploi d'une butée fixe est connu de l'homme de l'art et son action est très limitée. Non seulement une butée fixe ne permet pas de faire pivoter la charge sur un quart de tour mais également elle exerce une pression qui a tendance à déporter latéralement le colis. En outre, sa précision est généralement très insuffisante.

Avec une butée mobile, ces défauts sont surmontés ; il est possible d'orienter une charge selon un angle de rotation variable entre 0 et ± 90 °. En outre, en utilisant deux butées mobiles commandées successives, on pourra autoriser une rotation de oà ± 180 °

Par ailleurs, on évite tout déport latéral de la charge, celle-ci reste centrée sur le convoyeur linéaire, ce

qui est indispensable avec les installations automatiques de préhension qui requièrent un positionnement précis des colis.

Dans le cas d'un convoyeur à rouleaux, la ou les butées pourra être prévue en saillie entre deux rouleaux parallèles du chemin de roulements.

La dite butée 3 est commandée en déplacement pour soit sensiblement, soit exactement, disposer d'un point de contact fixe sur la charge 2. A l'origine, lorsque le colis arrive, il vient en contact avec la butée 3 telle qu'illustrée à la figure 1a, on assiste au début de la rotation.

La butée 3 s'écarte alors de l'axe central du convoyeur 1 pour suivre le mouvement de rotation de la charge 2 telle qu'illustrée à la figure 1b. Ce mouvement d'écartement de la butée 3 doit sensiblement se poursuivre jusqu'à ce que la diagonale du colis 2 soit parallèle à la transversale du convoyeur 1. Une fois ce stade atteint, il faut alors que la butée 3 repousse la partie arrière de la charge 2 telle qu'illustrée à la figure 1c pour ramener le colis 2 selon une direction longitudinale par rapport au convoyeur 1.

L'étude du mouvement montre qu'à tout instant, la butée 3 peut être écartée du colis 2 pour orienter celui-ci selon une inclinaison quelconque inférieure au quart de tour. De plus, durant l'action de pivotement de la charge 2, celle-ci poursuit son mouvement d'avance linéaire, ce qui permet au convoyeur linéaire de conserver sa capacité de transport.

L'action sans cesse contrôlée de la butée mobile 3 permet en outre à la charge 2 de ne pas subir de déport latéral, la charge restant centrée sur le convoyeur.

Pour des questions de sécurité de fonctionnement, la butée 3 entre en contact avec la charge à une certaine distance de son bord latéral 4 tel que cela est illustré à la figure 1a. Ceci permet de garantir le contact entre la butée 3 et la charge 2 même si cette dernière était légèrement décentrée sur le convoyeur linéaire.

Des études montrent que le mouvement mathématique parfait auquel devrait répondre le déplacement de la butée 3 correspond à un segment de crête de sinusoïde tel qu'illustré à la figure 2 sous le repère 5. L'abscisse correspond au temps écoulé et l'ordonnée à l'amplitude du déplacement transversal.

Le déplacement sinusoïdal parfait de la butée n'est cependant pas nécessaire dans l'application du palettiseur. C'est pourquoi selon la présente invention le déplacement réel effectuée par la butée 3 est décomposé en approximations linéaires 6, 7, 8, plus ou moins nombreuses, qui constituent l'approximation de la crête de la sinusoïde 5 telle qu'illustrée à la figure 2, un nombre minimal de deux mouvements linéaires étant au moins souhaitable. Le décalage de la butée 3 par rapport au bord latéral 4 (voir figure 1a) contribue à l'utilisation de cette approximation.

Le mouvement de la butée mobile 3 est commandé selon un mode préférentiel de réalisation de l'invention par un moteur pas à pas. Ce moteur est lui-même asservi par un automate programmable, ou tout autre commande précise et rapide.

Pour piloter la ou les butées, l'Homme du Métier tiendra compte des conditions suivantes :

- soit une charge, comme le montrent particulièrement les figures 1, de largeur "21", de longueur "2L", un convoyeur de vitesse de déplacement "V", et le décalage de la butée "d" par rapport au côté de la charge où elle va agir pour permettre la rotation, comme le montre particulièrement la figure 1a,
- l'équation sinusoïdale est donnée par la formule suivante

$$y = r \sin\left[\alpha + \left(\frac{\pi V}{2(L+l)}\right) \times t\right]$$

avec

$$\alpha = \operatorname{arctg}\left(\frac{l - d}{L}\right) \text{ et } r = \sqrt{L^2 + (l - d)^2} ,$$

- pour les approximations linéaires, par exemple dans le cas de deux approximations de part et d'autre de $Y_{max}$ = r on a les équations :

* de $t = o$ à $t = t_1$ avec

$$t_1 = \frac{(L + l)(\pi - 2\alpha)}{\pi V}$$

$$\cdot y = l + \left[\frac{r - l}{t_1}\right] t ,$$

* $t = t_1$ à $t = \frac{L + l}{V}$

$$\cdot y = r - \left[\frac{r - L}{\left(\frac{L + l}{V}\right) - t_1}\right] * (t - t_1)$$

Un tel dispositif trouvera une de ses applications dans le domaine de la palettisation et équipera avantageusement le convoyeur d'alimentation du palettiseur pour faciliter le rangement des charges ou colis sur la palette.

D'autres mises en oeuvre de la présente invention à la portée de l'homme de l'art auraient également pu être envisagées sans pour autant sortir du cadre de celle-ci.

**Revendications**

1. Dispositif à orienter les charges sur convoyeur linéaire, telles que notamment des colis parallélépipédiques sur chemin à rouleaux moteurs, caractérisé par le fait qu'il se présente sous la forme d'au moins une butée (3) commandée mobile transversalement par rapport au sens de déplacement de la dite charge sur le convoyeur.

2. Dispositif à orienter les charges sur convoyeur linéaire selon la revendication 1, caractérisé par le fait que la dite butée (3) est commandée en déplacement pour soit sensiblement, soit exactement, disposer d'un point de contact fixe sur la charge (2).

3. Dispositif à orienter les charges sur convoyeur linéaire selon la revendication 1, caractérisé par le fait que la dite butée (3) entre en contact avec la charge (2) à une certaine distance de son bord latéral (4).

4. Dispositif à orienter les charges sur convoyeur linéaire selon la revendication 2, caractérisé par le fait que la dite butée mobile (3) suit un mouvement de crête sinusoïdale (5).

5. Dispositif à orienter les charges sur convoyeur linéaire selon la revendication 4, caractérisé par le fait que le mouvement de déplacement de la dite butée (3) est décomposé en plusieurs mouvements linéaires (6, 7 et 8).

6. Dispositif à orienter les charges sur convoyeur linéaire selon la revendication 1, caractérisé par le fait que la dite butée (3) mobile est commandée par un moteur pas à pas.

7. Dispositif à orienter les charges sur convoyeur linéaire selon la revendication 6, caractérisé par le fait que le moteur pas à pas est commandé par un automate programmable.

8. Dispositif à orienter les charges sur convoyeur linéaire selon la revendication 1, caractérisé par le fait qu'il présente deux butées (3) mobiles commandées successives pour autoriser une rotation ± 180 °.

9. Palettisseur, présentant un convoyeur linéaire, caractérisé par le fait qu'il présente un dispositif à orienter les charges selon l'une quelconque des revendications précédentes.

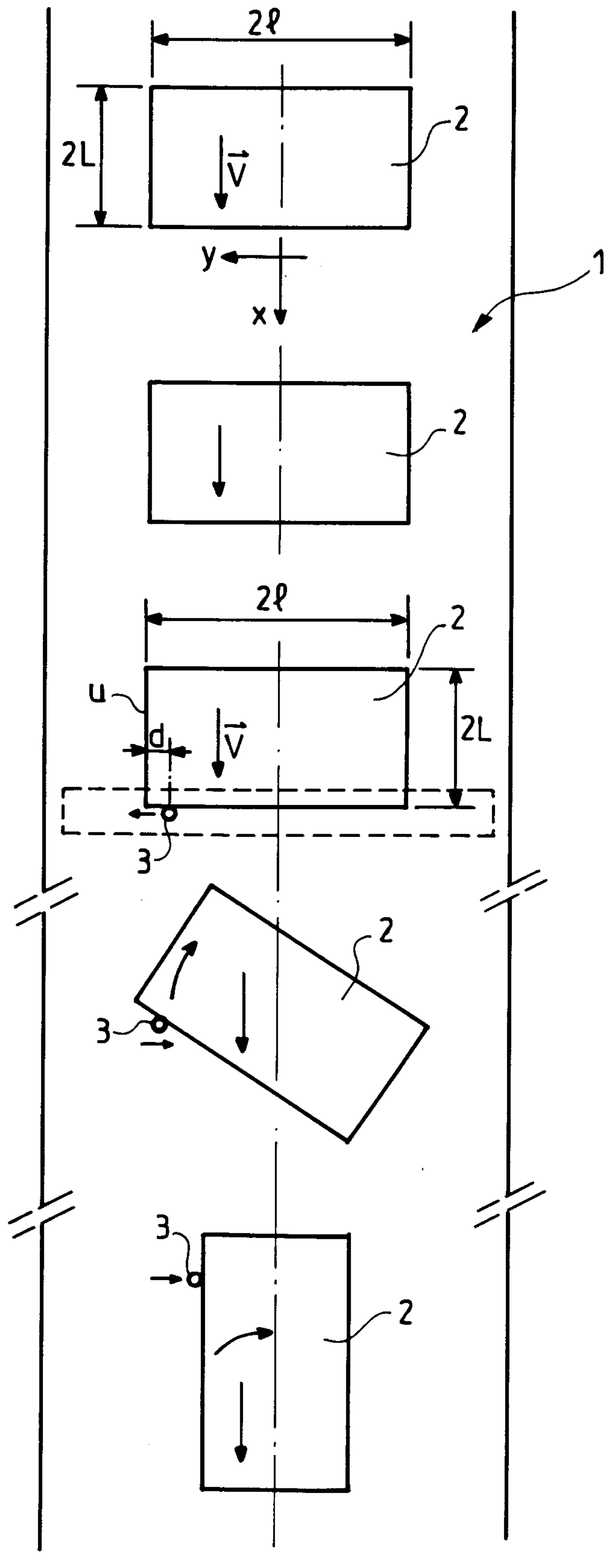


FIG.1a

FIG.1b

FIG.1c

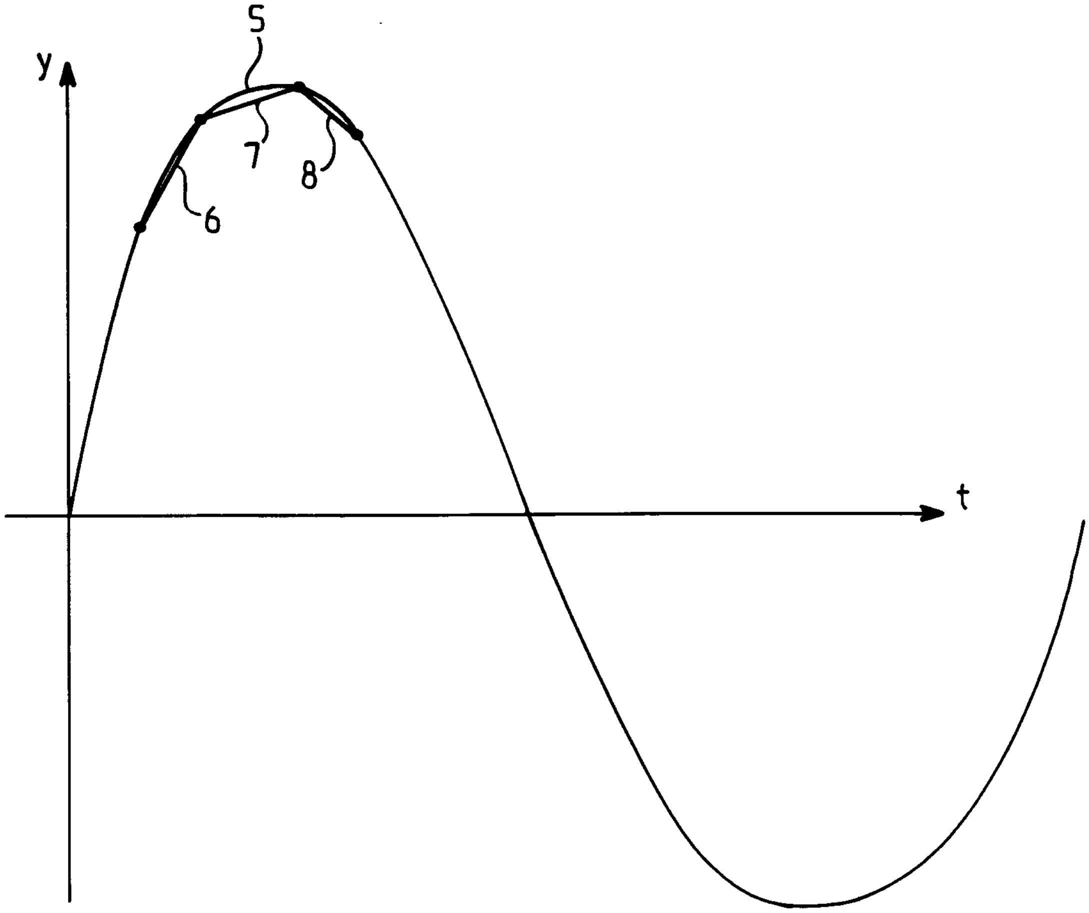


FIG. 2

Office européen des brevets

# RAPPORT DE RECHERCHE EUROPEENNE

Numéro de la demande

**EP 90 44 0089**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PATENT ABSTRACTS OF JAPAN, vol. 8, no. 120 (M-300)[1557], 6 juin 1984; & JP-A-59 26 819 (YAMADA KIKAI KOGYO K.K.) 13-02-1984 * Abrégé * | 1,3 | B 65 G 47/244 |
| A | IDEM | 2 | |
| X | DE-A-2 654 824 (SCHLOEMANN-SIEMAG AG) * Revendications 1,2; figure 1 * | 1,8 | |
| A | FR-A-2 297 772 (HOLMEK A/S) * Page 4, lignes 32-36; figure unique * | 1,2,3,9 | |
| A | AT-B-372 579 (HAAS WAFFELMASCHINEN) * Figure 2 * | 1 | |

DOMAINES TECHNIQUES RECHERCHES (Int. Cl.5)

B 65 G

Le présent rapport de recherche a été établi pour toutes les revendications

| Lieu de la recherche | Date d'achèvement de la recherche | Examinateur |
|---|---|---|
| La Haye | 28 mars 91 | BEERNAERT J.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant